# EUROPEAN PATENT APPLICATION

(11) **EP 4 528 528 A1**
(43) Date of publication of application: **26.03.2025**
(21) Application number: 23823245.8
(22) Date of filing: 16.06.2023
(51) Int. Cl.: G06F 16/182

(54) **DISK REDIRECTION METHOD AND APPARATUS, COMPUTER DEVICE, AND READABLE MEDIUM**

(30) Priority: 16.06.2022 CN 202210686183
(71) Applicant: ZTE Corporation, Shenzhen, Guangdong 518057 (CN)
(72) Inventor: SU, Sai, Shenzhen, Guangdong 518057 (CN)
(74) Representative: Canzler & Bergmeier Patentanwälte Partnerschaft mbB
(86) International application number: PCT/CN2023/100608
(87) International publication number: WO 2023/241679

(57) **Abstract**

The present disclosure provides a disk redirection method, which is applied to a disk redirection apparatus of a cloud desktop. A disk of a cloud terminal is pre-mapped in the disk redirection apparatus, and the disk redirection apparatus is deployed in a kernel mode and a user mode of a cloud desktop operating system. The method comprises: when a disk file operation request is obtained in a kernel mode, sending the disk file operation request to a user mode; and sending the disk file operation request to a cloud terminal in the user mode, such that the cloud terminal processes a local disk file of the cloud terminal according to the disk file operation request. The present disclosure further provides a disk redirection apparatus, a computer device, and a readable medium.

## Description

### CROSS REFERENCE TO RELATED APPLICATIONS

The present disclosure claims the priority to Chinese Patent Application No. 202210686183.1 entitled "DISK REDIRECTION METHOD AND APPARATUS, COMPUTER DEVICE, AND READABLE MEDIUM" and filed on June 16, 2022, the contents of which are incorporated herein by reference in their entirety.

### TECHNICAL FIELD

The present disclosure relates to the technical field of cloud desktops, and in particular, to a disk redirection method and apparatus, a computer device, and a readable medium.

### BACKGROUND

In a cloud desktop environment, a disk redirection function can map a disk in a cloud terminal (which is a fat client) to a cloud desktop, and a user can perform operations on the mapped disk through a file manager of the cloud desktop, and the operations include creation, deletion, renaming, reading, and writing.

Disk redirection is essentially implementing a file system in the cloud desktop, and the file system is virtual and does not really store files, but the file system is connected to the disk in the cloud terminal, and real files are stored in the disk; and the user performs the operations on the mapped disk in the cloud desktop, the operations are routed to the virtual file system, and the virtual file system finally applies the operations to the corresponding real files in the disk in the cloud terminal.

At present, the disk redirection can be realized for Windows cloud desktop, but cannot be realized for Linux cloud desktop.

### SUMMARY

The present disclosure provides a disk redirection method and apparatus, a computer device, and a readable medium.

An embodiment of the present disclosure provides a disk redirection method applied to a disk redirection apparatus of a cloud desktop, the disk redirection apparatus being deployed in a kernel mode and a user mode of a cloud desktop operating system, and a disk of a cloud terminal being mapped in the disk redirection apparatus in advance, and the method includes: in a case where a disk file operation request is acquired in the kernel mode, sending the disk file operation request to the user mode, wherein the disk file operation request is initiated by a cloud desktop user for the disk mapped in the disk redirection apparatus; and sending the disk file operation request to the cloud terminal in the user mode, so as to enable the cloud terminal to process a local disk file of the cloud terminal according to the disk file operation request.

An embodiment of the present disclosure further provides a disk redirection apparatus including a file system module and a disk redirection module, a disk of a cloud terminal being mapped in the disk redirection module in advance, and the disk redirection apparatus being deployed in a kernel mode and a user mode of a cloud desktop operating system; the file system module is deployed in the kernel mode of the cloud desktop operating system, and is configured to send, in a case where a disk file operation request is acquired in the kernel mode, the disk file operation request to the user mode, wherein the disk file operation request is initiated by a cloud desktop user for the disk mapped in the disk redirection apparatus; and the disk redirection module is deployed in the user mode of the cloud desktop operating system, and is configured to send the disk file operation request to the cloud terminal in the user mode, so as to enable the cloud terminal to process a local disk file of the cloud terminal according to the disk file operation request.

An embodiment of the present disclosure further provides a computer device, including one or more processors, and a storage device having one or more programs stored thereon; and when executed by the one or more processors, the one or more programs cause the one or more processors to implement the disk redirection method described above.

An embodiment of the present disclosure further provides a computer readable medium having a computer program stored thereon, wherein, when executed, the program implements the disk redirection method described above.

### BRIEF DESCRIPTION OF DRAWINGS

FIG. 1 is a flowchart illustrating a disk redirection method according to an embodiment of the present disclosure;
FIG. 2 is another flowchart illustrating a disk redirection method according to an embodiment of the present disclosure;
FIG. 3 is another flowchart illustrating a disk redirection method according to an embodiment of the present disclosure;
FIG. 4 is another flowchart illustrating a disk redirection method according to an embodiment of the present disclosure;
FIG. 5 is a flowchart illustrating sending a disk file operation request to a user mode according to an embodiment of the present disclosure;
FIG. 6 is a flowchart illustrating sending a disk file operation request to a cloud terminal in a user mode according to an embodiment of the present disclosure;
FIG. 7 is a flowchart illustrating sending a processing result to a kernel mode according to an embodiment of the present disclosure;
FIG. 8 is a schematic diagram of a disk redirection process according to an embodiment of the present disclosure;
FIG. 9 is a flowchart illustrating a disk redirection method according to a specific example of the embodiments of the present disclosure; and
FIG. 10 is a schematic structural diagram of a disk redirection apparatus according to an embodiment of the present disclosure.

### DETAIL DESCRIPTION OF EMBODIMENTS

Exemplary embodiments will be described more fully below with reference to the drawings, but the exemplary embodiments may be embodied in different forms, and should not be interpreted as being limited to the embodiments described herein. Rather, the embodiments are provided to make the present disclosure thorough and complete, and are intended to enable those of ordinary skill in the art to fully understand the scope of the present disclosure.

The term "and/or" used herein includes any and all combinations of one or more associated listed items.

The terms used herein are merely used to describe specific embodiments, and are not intended to limit the present disclosure. As used herein, "a" and "the" which indicate a singular form are intended to include a plural form, unless expressly stated in the context. It should be further understood that the term(s) "include" and/or "be made of" used herein indicate(s) the presence of the described features, integers, operations, elements and/or components, but do not exclude the presence or addition of one or more other features, integers, operations, elements, components and/or combinations thereof.

The embodiments described herein can be described with reference to plans and/or cross-sectional views with the aid of idealized schematic diagrams of the present disclosure. Accordingly, the exemplary drawings may be modified according to manufacturing techniques and/or tolerances. Therefore, the embodiments are not limited to those illustrated by the drawings, but include modifications to configuration formed based on a manufacturing process. Thus, regions shown in the drawings are illustrative, and shapes of the regions shown in the drawings illustrate specific shapes of regions of elements, but are not intended to make limitations.

Unless otherwise defined, all terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

At present, a file system is generally implemented in a kernel mode of a Linux operating system, which is not favorable for debugging and may cause the whole operating system to be unstable when a problem occurs. The embodiments of the present disclosure provide a disk redirection method, which can realize a disk redirection function of a Linux cloud desktop and solve the above problem.

The disk redirection method provided in the embodiments of the present disclosure is applied to a disk redirection apparatus of a cloud desktop, the disk redirection apparatus is deployed in a kernel mode and a user mode of a cloud desktop operating system, and a disk of a cloud terminal is mapped in the disk redirection apparatus in advance. It should be noted that the cloud terminal is a fat client in the embodiments of the present disclosure, and the fat client refers to a cloud terminal which has its own hard disk, Random Access Memory (RAM), and control computing unit, can run a computing program and a storage program by installing a full-fledged OS, and has a complete computing capability.

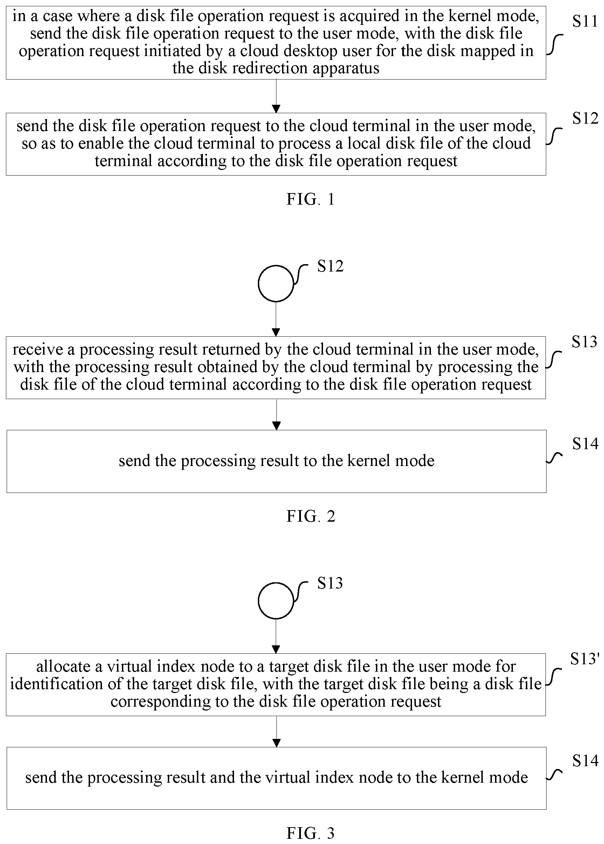

As shown in FIG. 1, a disk redirection method according to an embodiment of the present disclosure includes the following operations S11 and S12.

At operation S11, in a case where a disk file operation request is acquired in the kernel mode, the disk file operation request is sent to the user mode, with the disk file operation request initiated by a cloud desktop user for the disk mapped in the disk redirection apparatus.

Since the disk of the cloud terminal is already mapped in the disk redirection apparatus, the cloud desktop user may initiate the disk file operation request for the disk mapped in the disk redirection apparatus, and the disk file operation request may be trapped in the kernel mode through system call. A file system module of the disk redirection apparatus is deployed in the kernel mode. At the present operation, after the file system module acquires the disk file operation request, the file system module sends the disk file operation request to the user mode, so that a debugging tool of the user mode may be used for debugging, thereby facilitating development, debugging, and maintenance; and if a problem occurs, the problem may merely cause a crash of a current process, and does not cause the whole system to be unstable.

At operation S12, the disk file operation request is sent to the cloud terminal in the user mode, so as to enable the cloud terminal to process a local disk file of the cloud terminal according to the disk file operation request.

At the present operation, a disk redirection module of the disk redirection apparatus sends the disk file operation request to the cloud terminal through a network, the cloud terminal performs data processing on the corresponding disk file locally and obtains a processing result, and the disk redirection module waits for receiving the processing result returned by the cloud terminal.

The disk redirection method provided in the embodiment of the present disclosure is applied to the disk redirection apparatus of the cloud desktop, the disk of the cloud terminal is mapped in the disk redirection apparatus in advance, the disk redirection apparatus is deployed in the kernel mode and the user mode of the cloud desktop operating system, and the method includes: in a case where the disk file operation request is acquired in the kernel mode, sending the disk file operation request to the user mode, with the disk file operation request initiated by the cloud desktop user for the disk mapped in the disk redirection apparatus; and sending the disk file operation request to the cloud terminal in the user mode, so as to enable the cloud terminal to process the local disk file of the cloud terminal according to the disk file operation request. According to the embodiment of the present disclosure, a file system is moved upwards from the kernel mode of the operating system to the user mode of the operating system, so that the debugging tool in the user mode can be used for debugging, thereby facilitating development, debugging, and maintenance, improving stability of the operating system, realizing disk redirection of the Linux cloud desktop, supplementing functions of the cloud desktop, and enriching ecology of the cloud desktop.

In some embodiments, as shown in FIG. 2, after the disk file operation request is sent to the cloud terminal in the user mode (i.e., operation S12), the disk redirection method further includes the following operations S13 and S14.

At operation S13, a processing result returned by the cloud terminal is received in the user mode, with the processing result obtained by the cloud terminal by processing the disk file of the cloud terminal according to the disk file operation request.

At the present operation, the disk redirection module of the disk redirection apparatus receives the processing result returned by the cloud terminal.

At operation S14, the processing result is sent to the kernel mode.

At the present operation, the disk redirection module of the disk redirection apparatus sends the processing result sent by the cloud terminal to the file system module, thereby transferring the processing result from the user mode to the kernel mode.

Each file on the Linux cloud desktop is identified through an index node (iNode, ino). The disk in the cloud terminal may adopt a Windows file system such as the New Technology File System (NTFS), or may adopt a Linux file system such as the Fourth extended filesystem (EXT4). Files in the Windows file system do not have iNodes, while files in the Linux file system have iNodes, and the files on the Linux cloud desktop are identified according to the iNodes. In a case where the cloud terminal adopts the Windows file system, the Linux cloud desktop cannot identify the disk files, that is, the Linux cloud desktop can merely realize disk redirection with the cloud terminal adopting the Linux file system.

In order to solve the above problem, in some embodiments, as shown in FIG. 3, after the processing result returned by the cloud terminal is received in the user mode (i.e., operation S13) and before the processing result is sent to the kernel mode (i.e., operation S14), the disk redirection method further includes the following operation S13'.

At operation 13', a virtual index node is allocated to a target disk file in the user mode for identification of the target disk file, with the target disk file being a disk file corresponding to the disk file operation request.

At the present operation, after the cloud terminal returns the processing result of the disk file (which is the target disk file corresponding to the disk file operation request), the disk redirection module of the disk redirection apparatus allocates the virtual iNode (ino) to the target disk file as a file identifier, so that the cloud desktop may identify the target disk file through the virtual iNode, and all subsequent operations on the target disk file may be performed using the allocated virtual iNode.

By allocating the virtual iNode to the target disk file, no matter what file system is used on the cloud terminal, the disk redirection apparatus of the Linux cloud desktop uniformly uses the virtual iNode to identify the disk file, so that the Linux cloud desktop can be compatible with various types of file systems on the cloud terminal.

Accordingly, sending the processing result to the kernel mode (i.e., operation S14) includes: sending the processing result and the virtual index node to the kernel mode.

In some embodiments, the disk file operation request is initiated, by use of a file manager, by the cloud desktop user for the disk mapped in the disk redirection apparatus. That is, the cloud desktop user initiates the disk file operation request in the file manager, and a disk corresponding to the disk file operation request is the disk of the cloud terminal which is already mapped to the cloud desktop.

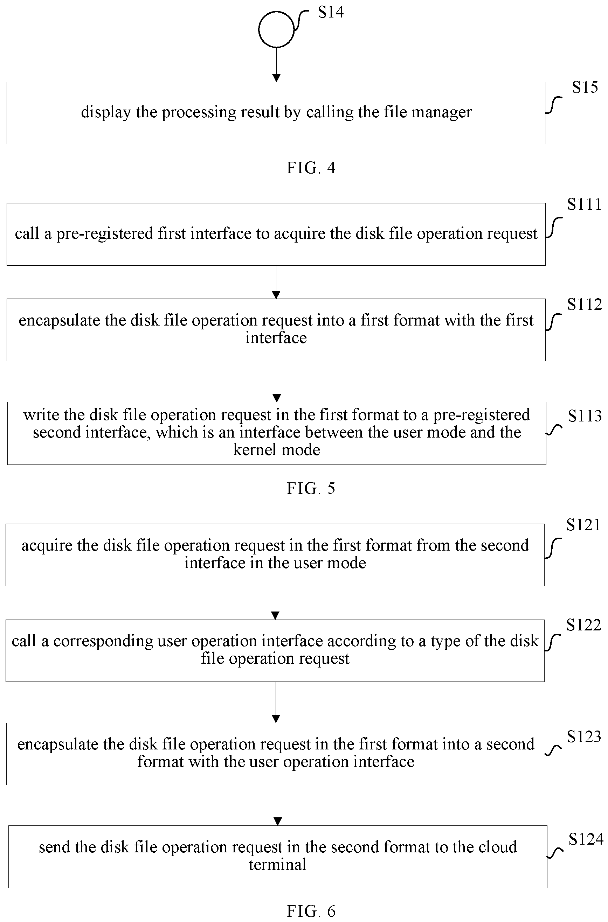

Accordingly, in some embodiments, as shown in FIG. 4, after the processing result is sent to the kernel mode (i.e., operation S14), the disk redirection method further includes the following operation S15.

At operation S15, the processing result is displayed by calling a file manager.

At the present operation, the file system module of the disk redirection apparatus calls the file manager to display the processing result, so as to show the processing result of the disk file operation request to the cloud desktop user.

In some embodiments, the file system module may be a Filesystem in Userspace (FUSE). The FUSE is a part of a Linux kernel, and performs, when the Linux is powered on, two functions: (1) to register a Virtual File System (VFS) interface, which is oriented to the cloud desktop user and may be called when the cloud desktop user performs an operation; and (2) to register a character device, which is a /dev/fuse interface and is oriented to the disk redirection module.

As shown in FIG. 5, sending the disk file operation request to the user mode (i.e., operation S11) includes the following operations S111 to S113.

At operation S111, a pre-registered first interface is called to acquire the disk file operation request.

The first interface is the VFS interface. At the present operation, the FUSE calls the VFS interface to acquire the disk file operation request initiated by the cloud desktop user.

At operation S112, the disk file operation request is encapsulated into a first format with the first interface.

At the present operation, the VFS interface encapsulates the disk file operation request according to an agreed protocol format (i.e., the first format), and encapsulates the disk file operation request into the first format.

At operation S113, the disk file operation request in the first format is written to a pre-registered second interface, which is an interface between the user mode and the kernel mode.

The second interface is the character device, i.e., the /dev/fuse interface, and the second interface is an interface between the user mode and the kernel mode. At the present operation, the FUSE sends the disk file operation request in the first format to the second interface, and writes the disk file operation request in the first format to the second interface, so that the disk file operation request may be acquired from the second interface in the user mode. It should be noted that the disk redirection module blocks reading the second interface in a case where no data is stored in the second interface.

In some embodiments, as shown in FIG. 6, sending the disk file operation request to the cloud terminal in the user mode (i.e., operation S12) includes the following operations S121 to S124.

At operation S121, the disk file operation request in the first format is acquired from the second interface in the user mode.

At the present operation, the disk redirection module of the disk redirection apparatus acquires the disk file operation request in the first format from the second interface.

At operation S122, a corresponding user operation interface is called according to a type of the disk file operation request.

At operation S123, the disk file operation request in the first format is encapsulated into a second format with the user operation interface.

At operation S124, the disk file operation request in the second format is sent to the cloud terminal.

A carrier of the disk redirection module is a daemon process in the user mode, the daemon process registers a series of interfaces when being started, and the interfaces correspond to all operations of the cloud desktop user (for example, a registered getattr interface corresponds to an operation of the user for viewing file attributes), and may read the character device (i.e., the second interface) and acquire data from the kernel mode. If the data is sent from the kernel mode to the user mode, the data may be received and acquired in the user mode through the second interface. Then, the daemon process calls the user operation interface, which is registered when the daemon process is started, according to the type of the disk file operation request, encapsulates the disk file operation request in the first format according to the protocol format (i.e., the second format) agreed with the cloud terminal to obtain the disk file operation request in the second format, sends the disk file operation request in the second format to the cloud terminal through the network, and waits for a reply from the cloud terminal.

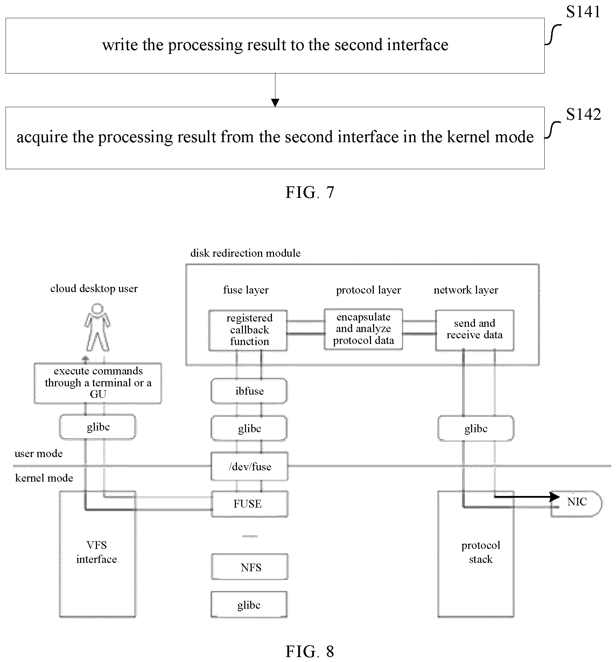

In some embodiments, as shown in FIG. 7, sending the processing result to the kernel mode (i.e., operation S14) includes the following operations S141 and S142.

At operation S141, the processing result is written to the second interface.

At operation S142, the processing result is acquired from the second interface in the kernel mode.

The disk redirection module (i.e., the daemon process) of the disk redirection apparatus writes the processing result sent by the cloud terminal to the second interface, and the file system module (i.e., the FUSE) of the disk redirection apparatus acquires the processing result from the second interface, so as to show the processing result to the cloud desktop user.

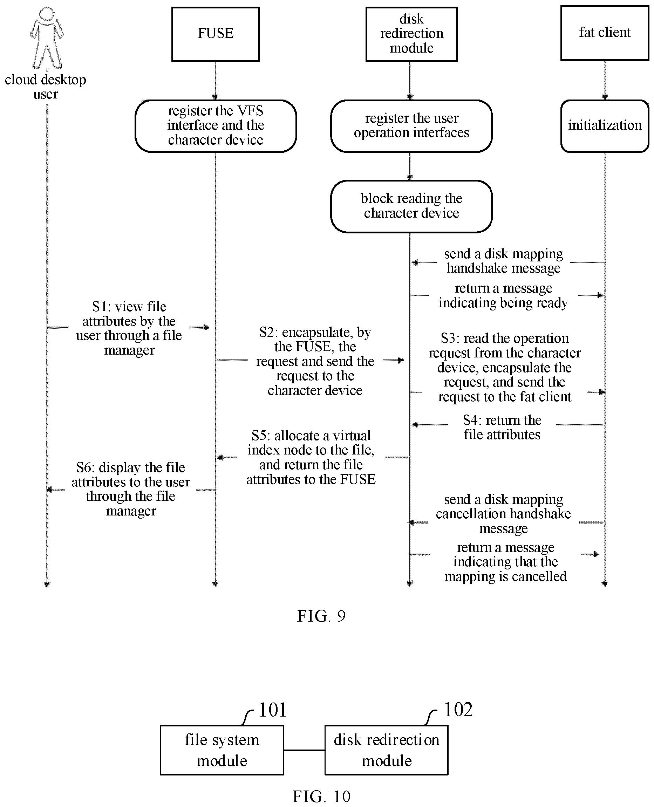

In order to explain the solutions of the embodiments of the present disclosure clearly, a disk redirection process according to the embodiments of the present disclosure is illustrated in detail below by a specific example with reference to FIG. 8 and FIG. 9.

FIG. 8 is a schematic diagram of a disk redirection process. As shown in FIG. 8, the cloud desktop user refers to a user using the Linux cloud desktop; the disk redirection module is a functional module of the disk redirection apparatus and is in the user mode, the carrier of the disk redirection module is a daemon process which is a process in which disk redirection module is deployed, and the disk redirection module is configured to receive the disk file operation request and send the disk file operation request to the cloud terminal; the file system module (i.e., a FUSE module) is a functional module of the disk redirection apparatus, is in the kernel mode, and provides the first interface (i.e., the VFS interface) for the cloud desktop user and provides the second interface (i.e., the /dev/fuse interface) for the daemon process.

FIG. 9 is a flowchart illustrating a disk redirection method according to a specific example of the embodiments of the present disclosure. **In** the specific example, an operation of viewing file attributes is taken as an example. As shown in FIG. 9, in the specific example, the cloud desktop user performs a disk redirection operation on a fat client through the disk redirection apparatus (including the FUSE module and the disk redirection module).

In an initialization phase, the FUSE module registers the VFS interface and creates the character device when the Linux is powered on, the disk redirection module registers the user operation interfaces and blocks reading the character device in a blocking read manner, and the fat client is initialized.

After the initialization is completed, the disk redirection module communicates with the fat client through a handshake process, so as to ensure that both the disk redirection module and the fat client are ready for the mapping of the disk. When the handshake phase is ended, it is indicated that the disk in the fat client is successfully mapped to the cloud desktop.

The disk redirection process includes the following operations S1 to S6.

At operation S1, the cloud desktop user views disk file attributes in the mapped disk through the file manager, that is, the cloud desktop user sends a file attribute view request to the FUSE module.

At operation S2, the FUSE module forwards the file attribute view request to the disk redirection module. The file attribute view request of the cloud desktop user may be trapped in the kernel mode through system call of the VFS interface, and the FUSE module encapsulates the file attribute view request with the VFS interface, and then sends the file attribute view request to the character device.

At operation S3, the disk redirection module reads the file attribute view request from the character device, further encapsulates the file attribute view request, and forwards the file attribute view request to the fat client through the network.

At operation S4, after the fat client acquires file attributes, the fat client returns the file attributes to the disk redirection module.

At operation S5, the disk redirection module allocates a virtual ino to the file as an identifier of the file, encapsulates the file attributes and the ino, and then sends the file attributes and the ino to the character device, and the character device sends the file attributes and the ino to the FUSE module.

At operation S6, the FUSE module displays the file attributes to the cloud desktop user through the file manager.

After the above operations are completed, the disk redirection module and the fat client cancel the mapping of the disk through a handshake process, so that the cloud desktop is disconnected from the fat client.

The embodiments of the present disclosure are applied to application scenarios of the Linux cloud desktop, and are used for the cloud desktop to access a storage device on the remote cloud terminal (i.e., the fat client). The FUSE is used for implementing a user-mode file system, and the disk file operation request of the user is processed in the user mode, which facilitates development, debugging, and maintenance; and the virtual ino is used for identifying the disk file, so that various file systems on the fat client can be compatible. By adopting the user-mode file system (the FUSE is used for moving from the kernel mode to the user mode) according to the embodiments of the present disclosure, disadvantages of a kernel file system are overcome, and stability and maintainability of a product are improved.

Based on the same technical concept, an embodiment of the present disclosure further provides a disk redirection apparatus. As shown in FIG. 10, the disk redirection apparatus includes a file system module 101 and a disk redirection module 102, a disk of a cloud terminal is mapped in the disk redirection module 102 in advance, and the disk redirection apparatus is deployed in a kernel mode and a user mode of a cloud desktop operating system.

The file system module 101 is deployed in the kernel mode of the cloud desktop operating system, and is configured to send, in a case where a disk file operation request is acquired in the kernel mode, the disk file operation request to the user mode, with the disk file operation request initiated by a cloud desktop user for the disk mapped in the disk redirection apparatus.

The disk redirection module 102 is deployed in the user mode of the cloud desktop operating system, and is configured to send the disk file operation request to the cloud terminal in the user mode, so as to enable the cloud terminal to process a local disk file of the cloud terminal according to the disk file operation request.

In some embodiments, the disk redirection module 102 is further configured to receive, after sending the disk file operation request to the cloud terminal in the user mode, a processing result returned by the cloud terminal in the user mode, with the processing result obtained by the cloud terminal by processing the disk file of the cloud terminal according to the disk file operation request, and send the processing result to the kernel mode.

In some embodiments, the disk redirection module 102 is further configured to allocate, after receiving the processing result returned by the cloud terminal in the user mode and before sending the processing result to the kernel mode, a virtual index node to a target disk file in the user mode for identification of the target disk file, with the target disk file being a disk file corresponding to the disk file operation request.

The disk redirection module 102 is configured to send the processing result and the virtual index node to the kernel mode.

In some embodiments, the disk file operation request is initiated, by use of a file manager, by the cloud desktop user for the disk mapped in the disk redirection apparatus.

The file system module 101 is further configured to display the processing result by calling the file manager after the processing result is sent to the kernel mode.

In some embodiments, the file system module 101 is configured to call a pre-registered first interface to acquire the disk file operation request; encapsulate the disk file operation request into a first format with the first interface; and write the disk file operation request in the first format to a pre-registered second interface, which is an interface between the user mode and the kernel mode.

In some embodiments, the disk redirection module 102 is configured to acquire the disk file operation request in the first format from the second interface in the user mode; call a corresponding user operation interface according to a type of the disk file operation request; encapsulate the disk file operation request in the first format into a second format with the user operation interface; and send the disk file operation request in the second format to the cloud terminal.

In some embodiments, the disk redirection module 102 is configured to write the processing result to the second interface, so that the file system module 101 acquires the processing result from the second interface in the kernel mode.

An embodiment of the present disclosure further provides a computer device, including: one or more processors and a storage device; and the storage device has stored thereon one or more programs which, when executed by the one or more processors, cause the one or more processors to implement the disk redirection method provided in the above embodiments.

An embodiment of the present disclosure further provides a computer readable medium having a computer program stored thereon; and when executed, the computer program implements the disk redirection method provided in the above embodiments.

It should be understood by those of ordinary skill in the art that the functional modules/units in all or some of the operations and the devices in the method disclosed above may be implemented as software, firmware, hardware, or suitable combinations thereof. If implemented as hardware, the division between the functional modules/units stated above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit. Such software may be distributed on a computer-readable medium, which may include a computer storage medium (or a non-transitory medium) and a communication medium (or a transitory medium). As well known by those of ordinary skill in the art, the term "computer storage medium" includes volatile/nonvolatile and removable/non-removable media used in any method or technology for storing information (such as computer-readable instructions, data structures, program modules and other data). The computer storage medium includes, but is not limited to, an RAM, a Read-Only Memory (ROM), an Electrically Erasable Programmable Read-Only Memory (EEPROM), a flash memory or other memory techniques, a Compact Disc Read Only Memory (CD-ROM), a Digital Versatile Disc (DVD) or other optical discs, a magnetic cassette, a magnetic tape, a magnetic disk or other magnetic storage devices, or any other medium which can be configured to store desired information and can be accessed by a computer. In addition, it is well known by those of ordinary skill in the art that the communication media generally include computer-readable instructions, data structures, program modules, or other data in modulated data signals such as carrier wave or other transmission mechanism, and may include any information delivery medium.

The present disclosure discloses the exemplary embodiments using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular embodiment can be used alone or in combination with features, characteristics and/or elements described in connection with other embodiments. Therefore, it should be understood by those of ordinary skill in the art that various changes in the forms and the details can be made without departing from the scope of the present disclosure of the appended claims.

## Claims

1. A disk redirection method applied to a disk redirection apparatus of a cloud desktop, the disk redirection apparatus being deployed in a kernel mode and a user mode of a cloud desktop operating system, a disk of a cloud terminal being mapped in the disk redirection apparatus in advance, and the method comprising:
in a case where a disk file operation request is acquired in the kernel mode, sending the disk file operation request to the user mode, wherein the disk file operation request is initiated by a cloud desktop user for the disk mapped in the disk redirection apparatus; and
sending the disk file operation request to the cloud terminal in the user mode, so as to enable the cloud terminal to process a local disk file of the cloud terminal according to the disk file operation request.

2. The method of claim 1, wherein after sending the disk file operation request to the cloud terminal in the user mode, the method further comprises:
receiving a processing result returned by the cloud terminal in the user mode, with the processing result obtained by the cloud terminal by processing the disk file of the cloud terminal according to the disk file operation request; and
sending the processing result to the kernel mode.

3. The method of claim 2, wherein after receiving the processing result returned by the cloud terminal in the user mode and before sending the processing result to the kernel mode, the method further comprises:
allocating a virtual index node to a target disk file in the user mode for identification of the target disk file, with the target disk file being a disk file corresponding to the disk file operation request, and
sending the processing result to the kernel mode comprises:
sending the processing result and the virtual index node to the kernel mode.

4. The method of claim 2, wherein the disk file operation request is initiated, by use of a file manager, by the cloud desktop user for the disk mapped in the disk redirection apparatus; and
after sending the processing result to the kernel mode, the method further comprises:
displaying the processing result by calling the file manager.

5. The method of any one of claims 2 to 4, wherein sending the disk file operation request to the user mode comprises:
calling a pre-registered first interface to acquire the disk file operation request;
encapsulating the disk file operation request into a first format with the first interface; and
writing the disk file operation request in the first format to a pre-registered second interface, with the second interface being an interface between the user mode and the kernel mode.

6. The method of claim 5, wherein sending the disk file operation request to the cloud terminal in the user mode comprises:
acquiring the disk file operation request in the first format from the second interface in the user mode;
calling a corresponding user operation interface according to a type of the disk file operation request;
encapsulating the disk file operation request in the first format into a second format with the user operation interface; and
sending the disk file operation request in the second format to the cloud terminal.

7. The method of claim 5, wherein sending the processing result to the kernel mode comprises:
writing the processing result to the second interface; and
acquiring the processing result from the second interface in the kernel mode.

8. A disk redirection apparatus, comprising a file system module and a disk redirection module, a disk of a cloud terminal being mapped in the disk redirection module in advance, and the disk redirection apparatus being deployed in a kernel mode and a user mode of a cloud desktop operating system,
the file system module is deployed in the kernel mode of the cloud desktop operating system, and is configured to send, in a case where a disk file operation request is acquired in the kernel mode, the disk file operation request to the user mode, wherein the disk file operation request is initiated by a cloud desktop user for the disk mapped in the disk redirection apparatus; and
the disk redirection module is deployed in the user mode of the cloud desktop operating system, and is configured to send the disk file operation request to the cloud terminal in the user mode, so as to enable the cloud terminal to process a local disk file of the cloud terminal according to the disk file operation request.

9. A computer device, comprising:
one or more processors; and
a storage device having one or more programs stored thereon;
when executed by the one or more processors, the one or more programs cause the one or more processors to implement the disk redirection method of any one of claims 1 to 7.

10. A computer readable medium having a computer program stored thereon, wherein, when executed, the program implements the disk redirection method of any one of claims 1 to 7.
